# EUROPEAN PATENT APPLICATION

(11) **EP 1 349 083 A1**
(43) Date of publication of application: **01.10.2003**
(21) Application number: 02252223.9
(22) Date of filing: 27.03.2002
(51) Int. Cl.: G06F 17/30

(54) **Rule-based data extraction from web pages**

(71) Applicant: BRITISH TELECOMMUNICATIONS public limited company, London EC1A 7AJ (GB)
(72) Inventor: The designation of the inventor has not yet been filed
(74) Representative: Williamson, Simeon

(57) **Abstract**

A method and apparatus for extracting information from web servers connected to the Internet 30 in such a way that the extracted information can be re-used by a server 20 to generate a table of information extracted from a plurality of different web-sites in order to present a summary of the information to a user terminal 10 connected to the server 20. The information is extracted using a method which extracts the information on the basis of where the data is located within the web-site as viewed by a human viewer such that the method is robust to changes in the underlying structure of the HTML code which do not greatly affect the look of the web-page from a human user's perspective.

## Description

### Technical Field

The present invention relates to a method and apparatus for processing data presented in a semi-structured format, such as, for example, data found in internet web-sites. In particular, the present invention relates to a method and apparatus for generating computer programs adapted to automatically process web-sites and to attempt to extract certain desired data from the web-sites, and also to the computer programs generated in this way.

### Background to the Invention

Computer programs which are intended to automatically process web-sites and return certain desired data items for further processing or for review by a user are known. Such programs are usually referred to as "wrappers".

A paper by A. Sahuguet and F. Azavant entitled "Building light-weight wrappers for legacy web data sources using w4f" and published in The Proceedings of International Conference on Very Large Databases (VLDB), 1999 describes the "W4F (World-Wide Web Wrapper Factory) toolkit" which is a suite(ie a toolkit) of computer programs including a graphical user interface which can be used to generate Web wrappers. Each wrapper generated using the W4F toolkit is itself a java program (in byte code - a so-called java class file) and consists of three independent layers: a retrieval layer; an extraction layer and a mapping layer. The function of the retrieval layer is to locate and fetch Hyper-Text Markup Language (HTML) content to be "wrapped"; this is done using a url which constitutes the input data passed to the wrapper. The extraction layer extracts desired data from the HTML content according to various rules specified by the wrapper author. The mapping layer specifies how the extracted data is exported (for viewing by a user or for further processing by another computer program). The rules, which are specified by the wrapper author, are expressed using a high level computer language referred to as HEL (HTML Extraction Language) which permits a declarative specification of information to be extracted from the HTML content to be wrapped.

HEL is a language which relies on a Document Object Model (DOM) representation of a piece of HTML content such as a web-site page. The language permits a user to specify the location of data to be extracted by reference to features explicitly coded into the HTML content (ie by reference to HTML tags). For example, HEL would permit a wrapper to extract the data located in the first and second columns of a table located at a specified position within the DOM tree of a web-page written in HTML.

Using HEL means that it is relatively straightforward for a user to generate wrapping rules for a wrapper to locate and extract the desired information from a web-site. Thus the W4F tool-kit includes a "wizard" with which a user may point to an item of information on a web-site which he/she would like the final wrapper, once made, to extract and the wizard automatically generates the correct HEL commands for extracting that piece of information. The HEL commands can then be compiled into a java class and the formation of the wrapper is complete.
However, wrappers generated in this way are not robust to even relatively small changes to the structure of a web-site caused, for example, by a web-site author updating, improving, enhancing or otherwise modifying his or her web-site. For example, because a wrapper generated using the W4F toolkit relies heavily on the nature and position of HTML tags, if a web-author modifies a web-site to present the same information no longer in a table format but instead in a bullet point format, a new wrapper will have to be produced to obtain the same information from the modified web-site.
Similarly, changing a heading from simple text to a hyperlink, altering the ordering of certain text items to change the emphasis of certain pieces of information, etc. may all require a new wrapper to be created when using the W4F toolkit.

### Summary of the Invention

According to a first aspect of the present invention, there is provided a method of extracting information from a specified ordered group of data containing semi-structured data, the method comprising the steps of:
extracting data from within the specified ordered group of data from a location as specified by a plurality of rules; wherein
the rules specify the location, within the specified ordered group of data, of data to be extracted, in terms of visual characteristics of the data to be extracted as they appear when the specified ordered group of data is displayed using a computer application capable of displaying the semi-structured data in a manner determined by formatting data included in the specified ordered group of data.

The term semi-structured data is used to refer to data which, when displayed in the manner in which the author of the data intended for it to be displayed (eg in the case of HTML content, when it is displayed using a web-browser adapted for displaying HTML content, or, in the case of formatted text, when displayed using a word-processing application capable of correctly interpreting the formatting instructions contained in the text file), has a logical structure to it which although not adhering to a strict formula specifying exactly where particular types of data should be located, nonetheless has a certain level of structure for permitting a viewer to intuitively gleam the facts of interest to the viewer in a relatively short period of time. For example, web-site pages designed for the sale of a particular model of mobile telephone will generally structure the layout of the text such that the most "important" information (eg the name of the model, the cost of the model, the networks on which the mobile can be operated and other specifications of typical interest to a potential user) will usually be located in large text towards the top of the page, whilst less "important" information, such as standard terms and conditions of sale, exclusions of warranty, etc. will tend to be located in smaller text towards the bottom of the page. Similarly, a Curriculum Vitae is normally written in a semi-structured manner with the most "important" information (eg a listing of qualifications and skills most relevant to a particular position for which the author of the Curriculum Vitae is applying) located near the top of the document possibly with some sort of formatting emphasis (eg underling, italics or bold font), whilst less "important" information is located near the bottom of the document.

Preferably, the ordered group of data is a data file storing, for example, HTML content, formatted text data or a combination of formatted text data and non-text data (such as pictures). In the case where the ordered group of data is a data file storing HTML content, the rules specify the location of the data to be extracted in terms of visual characteristics of the data as they appear when the data file is displayed using a web browser, and the formatting data included in the data file is in the form of HTML tags.

Preferably, the rules are formed from a combination of one or more specifications of the following visual characteristics of the data to be extracted as they appear, relative to the appearance of the specified data file as a whole, when the specified file is displayed within the browser: the fractional area within the specified file, as it appears within the displaying computer application, of the data; the relative size of the font of the data if it is in the form of text; the colour of the data; the proximity of the data to a specified keyword; and the location of the data relative to a specified keyword.

The method may be carried out using computer processing means capable of reading the specified file and writing extracted data to a suitable memory. In such a case, the method may include the step of inputting the rules to the computer processing means. Preferably, in such a case, the rules are inputted using a graphical user interface which prevents a user from specifying rules which depend upon the structure of HTML code within the file instead of the visual characteristics of the data as they appear when the specified file is displayed.

According to a second aspect of the present invention, there is provided a method of generating a set of rules for extracting one or more sets of data from a specified ordered group of data containing semi-structured data, the method comprising the steps of:
controlling the display of a list of names of visual characteristics suitable for describing the location of a set of data to be extracted from a specified ordered group of data containing semi-structured data; and
generating one or more rules involving a combination of one or more of the displayed characteristics together with one or more specified values of the characteristics, in response to input signals generated by a user.

Preferably, the method further includes the step of converting the rules into computer implementable instructions for processing an input file containing HTML content and to output the data which would be displayed at the location specified by the rules if the input file were displayed in a browser for displaying HTML content. Preferably, the computer implementable instructions are in the form of a Java class file.

According to a third aspect of the present invention, there is provided a device for generating a set of rules for extracting one or more sets of data from a specified ordered group of data containing semi-structured data comprising:
display control means for controlling the display of a list of names of visual characteristics suitable for describing the location of a set of data to be extracted from a specified ordered group of data containing semi-structured data; and
rule generation means for generating one or more rules comprising a combination of one or more of the displayed characteristics together with one or more specified values of the characteristics, wherein the specified values of the characteristics are set in response to input signals generated by a user via a user interface.

Preferably, the device further includes conversion means for converting the generated rules into computer implementable instructions for processing an input file containing HTML content and outputting the data which would be displayed at the location specified by the rules if the input file were displayed in a browser for displaying HTML content. Preferably, the computer implementable instructions are in the form of a Java class file.

### Brief description of the drawings

In order that the present invention may be better understood, embodiments thereof will now be described by way of example only with reference to the accompanying drawings in which:
Figure 1 is a block diagram of a computer network including a server computer running a web-wrapper program for extracting information from web sites hosted on other computers connected to the Internet;
Figure 2 is a flow chart illustrating the steps performed by the web-wrapper program running on the server computer illustrated in Figure 1, including a subroutine for processing a particular page of a particular web-site;
Figure 3 is a flow chart illustrating the steps performed by the subroutine illustrated in Figure 2 for processing a particular page of a particular web-site;
Figure 4 is a screen dump of an HTML file suitable for processing by the web-wrapper program illustrated in Figures 2 and 3 as viewed by a web browser;
Figure 5 is a flow chart illustrating the steps performed in generating a set of wrapping rules for use in forming a web-wrapper, using a web-wrapper development tool application;
Figure 6 is a screen dump of a wordprocessor file suitable for processing by the web-wrapper program illustrated in Figures 2 and 3 as viewed using a compatible wordprocessor application; and
Figure 7 is a block diagram of a computer network comprising a user terminal computer connected to the Internet and running a web-wrapper program for extracting information from a web-site hosted on a server computer connected to the Internet.

### Description of the First Embodiment

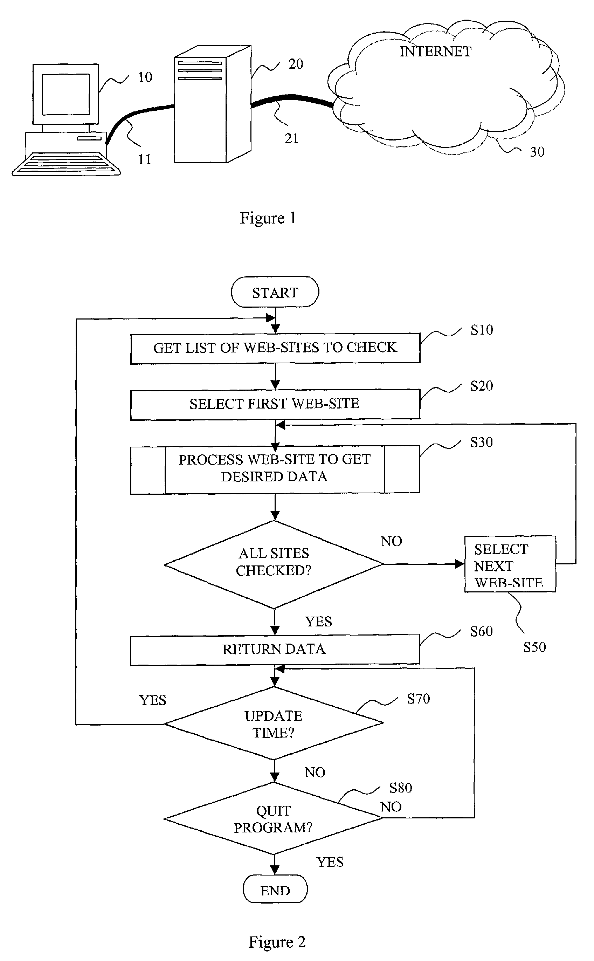

Figure 1 shows a computer network comprising a user terminal computer 10, operated by a user (not shown), which is connected, via a data connection 11, to a server computer 20. The server computer 20 is owned by an Internet Service Provider used by the user to access the Internet 30 to which the server computer 20 has a fast data connection 21. One of the web-sites hosted by the server computer 20 in this embodiment is a mobile telephone comparison web-site for obtaining the latest prices available for a number of different mobile telephone models from a number of different web-sites hosted on a variety of different server computers connected to the Internet. The mobile telephone comparison web-site collects this information together into a comparison table which may be viewed by a user within a single web page, forming part of the mobile telephone comparison web-site, for ease of comparison.

In order to obtain the information to be presented in the comparison table, the server computer 20 runs a computer program which periodically accesses each of a number of different web-sites which each include an offered price for a particular model of mobile telephone. The Hyper Text Mark-up Language (HTML) content comprising each such web-site is processed by the program and the current value of the offered price (together with other useful information included in the table) is extracted from the HTML content and used to up-date the comparison table.

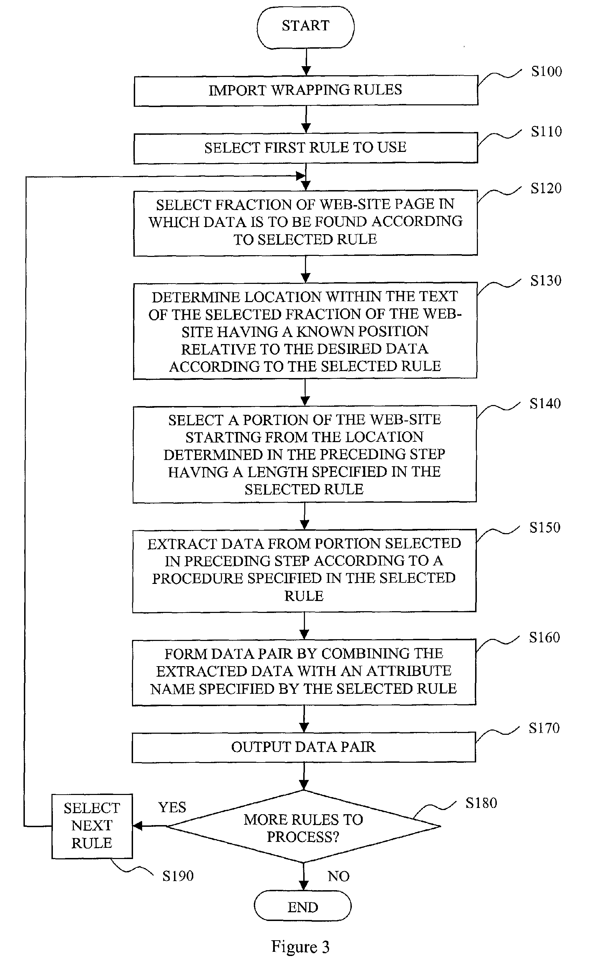

The steps performed by the computer program are now described in greater detail with reference to Figures 2 and 3. Upon commencement of the program, the program imports at step S10 a list of HTML files (each of which is specified by reference to a URL or an expression which evaluates to a URL) for processing by the program. Flow then proceeds to step S20 in which the first of the HTML files specified in step S10 is selected and downloaded for processing.

Flow then passes to subroutine S30 in which the HTML file downloaded in the previous step is processed to attempt to retrieve the desired data from the file.

In the present embodiment, the desired data is: i) the name of the model of mobile telephone; ii) the name of the network operator associated with the telephone for the specified price; iii) the original or high street price associated with the mobile telephone; iv) the current or offered price advertised on the web-site being processed; v) the indicated saving (ie the difference between the original or high street price and the current or offered price advertised by the web-site); and vi) the current availability of the telephone (ie whether or not the item is in stock).

Once the subroutine has finished, the successfully extracted data are stored in appropriate fields (ie named memory locations from which the stored data can be readily accessed), and flow passes to step S40 at which it is determined whether or not all of the HTML files specified in step S10 have now been processed. If not, flow passes to step S50 in which the next HTML file specified in step S10 is downloaded for processing and flow returns to step S30 for processing the newly downloaded HTML file. If it is determined at step S40 that all of the HTML files specified in step S10 have now been processed, flow passes to step S60.

In step S60, the data which has been newly stored in a set of appropriate fields is made available for other programs to access. In the present embodiment, access to the fields in question is prevented while the program is running (ie during steps S10 to S50) to prevent any external programs from attempting to read the fields during a write operation when the data stored will be invalid. Such procedures are well understood in the field of object oriented programming and will not be described here at greater length.

Upon completion of step S60, flow passes to step S70 at which it is tested if sufficient time has elapsed for the fields to be re-updated. In the present embodiment, the program is run every hour to ensure that the data displayed in the comparison table is never more than one hour out of date. Since mobile telephone prices rarely change more frequently than every few days, this is considered to be amply frequent.

Step S80 combines with step S70 to form a continuous waiting loop. If it is not detected to be time for re-running the program, it is checked in step S80 whether or not the program has received an instruction to quit; if so, the program ends, otherwise flow repeatedly returns to step S70 until it is time for the program to be re-run at which point flow passes back to step S10 and the entire program is re-run.

Referring now to Figure 3, upon commencement of subroutine S30, flow passes to step S100 in which the wrapping rules for use in processing the recently downloaded HTML file (downloaded either in step S20 or S50 as appropriate) are imported from a store of wrapping rules. In the present invention, a single set of wrapping rules is used for processing each of the HTML files specified, by reference to a URL, in step S10. However, alternative embodiments could use different sets of wrapping rules for different URLs. However, it is important to note that the wrapping rules employed in the present embodiment are robust to changes in the content of the HTML files caused by updating of the HTML file to reflect, for example, changes in the offered price of a mobile telephone. Thus even if different wrapping rules are used for different URLs, the wrapping rules should not require updating every time the HTML content located at the specified URL is updated. In the present embodiment, the wrapping rules are sufficiently robust that only a single set of wrapping rules is required for all of the specified URLs and despite minor modifications occurring at those URLs in order to periodically update the HTML content stored at those URLs.

In the present embodiment, there are eight wrapping rules each of which is specified by setting a value for each of seven different rule fields. The seven different rule fields are: i)*attribute name;* ii)*attribute location; iii)attribute content;* iv)*attribute range;* v)*data extraction method;* vi)*data content;* and vii)*data range.* The eight wrapping rules are:
Wrapping rule 1:
   *attribute name: "Brand_of_Mobilephone"*
   *attribute location: "heuristic matching"*
   *attribute content: "biggest size"*
   *attribute range: "top"*
   *data extraction method: "direct"*
   *data content: null*
   *data range: 0*
Wrapping rule 2:
   *attribute name: "Service_Provider"*
   *attribute location: "data matching"*
   *attribute content: "btcellnet", "orange", "one2one"*
   *attribute range: "top"*
   *data extraction method: "matched"*
   *data content: null*
   *data range: 0*
Wrapping rule 3:
   *attribute name: "Original_Price"*
   *attribute location: "domain matching"*
   *attribute content: "rrp"*
   *attribute range: "whole"*
   *data extraction method: "indirect"*
   *data content: "next currency"*
   *data range: 3*
Wrapping rule 4:
   *attribute name: "Current_Price"*
   *attribute location: "domain matching"*
   *attribute content: "only"*
   *attribute range: "whole"*
   *data extraction method: "indirect"*
   *data content: "next currency"*
   *data range: 3*
Wrapping rule 5:
   *attribute* name: *"Comparable_Price"*
   *attribute location: "domain matching"*
   *attribute content: "save"*
   *attribute range: "whole"*
   *data extraction method: "indirect"*
   *data content: "next currency"*
   *data range: 3*
Wrapping rule 6:
   *attribute name: "Availability"*
   *attribute location: "domain matching"*
   *attribute content: "in stock"*
   *attribute range: "whole"*
   *data extraction method: "boolean"*
   *data content: null*
   *data range: 0*
Wrapping rule 7:
   *attribute name: "Sale_ID"*
   *attribute location: null*
   *attribute content: null*
   *attribute range: null*
   *data extraction method: "generate"*
   *data content: "Brand_of_Mobilephone", "Service_Provider"*
   *data range: null*
Wrapping rule 8:
   *attribute name: "URL"*
   *attrubute location: null*
   *attribute content: null*
   *attribute range: null*
   *data extraction method: "generate"*
   *data content: "URL1"*
   *data range: null*

Upon completion of step S100, flow passes to step S110 in which the first of the eight wrapping rules imported in step S100 is selected (ie Wrapping rule 1 is selected).

Having selected a wrapping rule, flow passes to step S120 in which the fraction of the web-site page corresponding to the HTML file being processed in which the data to be extracted is expected to be located is selected. This is done, in the present embodiment, by executing a method called *cutAttributePage* which takes as arguments the HTML file being processed and the rule field *attribute range* and then storing the resultant output in the intermediate processing field *attributePageFraction*.

If the rule field *attribute range* has the value "top" (see Wrapping rules 1 and 2) then, in the present embodiment, only the first 12000 characters of the body of the HTML file are stored in the intermediate processing field *attributePageFraction* and considered in steps S130 to S150. If the field *attribute range* has the value "middle" then only the characters between the 6000^{th} and the 18000^{th} characters are considered in subsequent steps. If the field *attribute range* has the value "bottom" then only the characters after the 12000^{th} character are considered in subsequent steps. If the field *attribute range* has the value "whole" (see Wrapping rules 3 to 6) or null (which is the default value - see Wrapping rules 7 and 8) then all characters in the HTML file are stored in the field *attributePageFraction* and considered in the subsequent steps.

Note that the above described implementation is a rather simple implementation of the method *cutAttributePage* which is adequate for typical web-sites advertising mobile telephones. However, it is clear that a more sophisticated implementation of the method could be used which first calculates, say, the number of lines of text in the web-site and then divides these into three equal parts and considers only those characters falling within the respective specified part, etc.

Upon completion of step S120, flow passes to step S130 in which the approximate location of the data to be extracted is identified. In the present embodiment, this is performed using the method *locateAttribute* which takes as arguments the intermediate processing field *attributePageFraction* and the rule fields *attribute location* and *attribute content* and storing the resultant output in the intermediate processing field *attributeLocation.*

In the present implementation of the method *locateAttribute,* the method behaves differently depending upon which of the allowed values the rule field *attribute location* takes (the allowed values in the present implementation are "heuristic matching" (see Wrapping rule 1), "data matching" (see Wrapping rule 2), "domain matching" (see Wrapping rules 3 to 6) and null (see Wrapping rules 7 and 8)). Where *attribute location* takes the value "heuristic matching", the method expects the field *attribute content* to take either the value "biggest size" (see Wrapping rule 1) or "bold font" and searches either through all of the HTML tags indicating a special font size and outputs the sequential position of the character immediately following the HTML tag indicating the largest font size in the data stored in the field *attributePageFraction* or through the HTML tags until a tag is found indicating that the following text is to be displayed in a bold font and outputs the sequential position of the character immediately following such a tag respectively.

Where *attribute location* takes the value "data matching" the method attempts to find a match between any of the words or phrases (ie single strings) stored in the rule field *attribute content* with any part of the data stored in the field *attributePageFraction.* Upon finding such a match, the sequential position of the character at the start of the matched word or phrase in the field *attributePageFraction* is output and stored in the intermediate processing field *attributeLocation* (as distinct from the rule field *attribute location).*

Where the rule field *attribute location* takes the value "domain matching" the method behaves in a similar way to the "data matching" case described above. Thus it considers the string or strings contained in the rule field *attribute location* and attempts to match this up with the text contained in the intermediate processing field *attributePageFraction*. As soon as a match is found, the sequential position of the character at the start of the matched word or phrase in the field *attributePageFraction* is output and stored in the intermediate processing field *attributeLocation.*

Upon completion of step S130, flow passes to step S140 in which a portion of the text stored in *attributePageFraction* is selected which is intended to include the desired data to be extracted. In the present embodiment, this is performed by using the method *cutDataPage* which takes as arguments the intermediate processing fields *attributePageFraction* and *attributeLocation* and the rule field *data range* and then storing the resultant output in the intermediate processing field *dataPageFraction.* The selected text is that commencing at the location specified in the intermediate processing field *attributeLocation* and extending for as many words as are specified in the rule field *data range.*

Upon completion of step S140, flow passes to step S150 in which the data to be extracted is selected from the text selected in step S140. In the present embodiment, this is performed using the method *extractData* which takes as arguments the intermediate processing field *dataPageFraction* and the rule fields *data extraction method* and *data content* and storing the resultant extracted data in the intermediate processing field *attributeData.*

In the present embodiment, the operation of the method *extractData* varies in dependence upon the content of the rule field *data extraction method* which, in the present embodiment, can take on one of: "matched", "direct", "indirect" and "generated". In the case where the rule field *attribute location* takes the value "data matching", the rule field *data extraction method* should take the value "matched" and, in this case, the content of the intermediate processing field *dataPageFraction* should already hold the desired data to be extracted and therefore the method *extractData* simply returns the contents of *dataPageFraction* for storing in *attributeData.*

Where the rule field *attribute location* takes the value "heuristic matching" or "domain matching" the rule field *data extraction method* can take on any of "direct", "indirect" or "Boolean" (see Wrapping rules 1, 3, 4, 5 and 6). Where it takes the value "direct" (see Wrapping rule 1), the *extractData* method again simply returns the contents of *dataPageFraction*. Where it takes the value *"indirect"* (see Wrapping rules 3, 4 and 5) the *extractData* method examines the contents of the rule field *data content* and extracts the first occurrence of data of the specified type of data content (eg "next currency" in Wrapping rules 3, 4 and 5 which causes the *extractData* method to return the first detected currency - designated by a £ sign in the present embodiment - from the text stored in *dataPageFraction*). Where it takes the value "Boolean" (see Wrapping rule 6) the method *extractData()* returns a Boolean value (ie true or false) depending on whether the string found in the rule field *attribute content* (eg "in stock") is matched in the text contained within the intermediate processing field *dataPageFraction.*

The final possibility for the rule field *data extraction method* is that it contains the term "generate" in which case, the content of the intermediate processing field *dataPageFraction* (which should generally be null when "generating" rather than "extracting") is ignored. Instead, in this case, the contents of the rule field *data content* are examined and where the contents are specific values of the rule field *attribute name* (ie specific to a particular wrapping rule), the extracted data associated with the thus identified wrapping rules are selected and combined and then stored in the intermediate processing field *attributeData* (see Wrapping rule 7). Where the contents are a single string, this single string is simply returned and stored directly in the intermediate processing field *attributeData* (see Wrapping rule 8).

Upon completion of step S150, flow passes to step S160 in which the data extracted in the preceding step is combined with the associated *attribute name* to form a pair of data which forms the final output of the method. In the present embodiment, this is performed using a method called *generatePair* which takes as arguments the rule field *attribute name* and the intermediate processing field *attributeData* and combines the contents of these fields to form a data pair which is stored in the output field pair for use by external programs.

Upon completion of step S160, flow passes to step S170 in which the field *pair* is output. In the present case, this involves unlocking the output field *pair* so that external programs or threads may access the contents of this field. Note that the output field *pair* is, in this embodiment, one of an array of such output fields, such that there is one output field pair for each wrapping rule, and the particular member of the array can be accessed by using the wrapping rule number as an index or by referral to the content of the rule field *attribute name* for each particular wrapping rule.

Upon completion of step S170, flow passes to step S180 in which it is determined if there are more rules still to be processed for the currently selected HTML file. If so, flow passes back to step S120. Otherwise, the subroutine ends and flow passes to step S40 (see Figure 2).

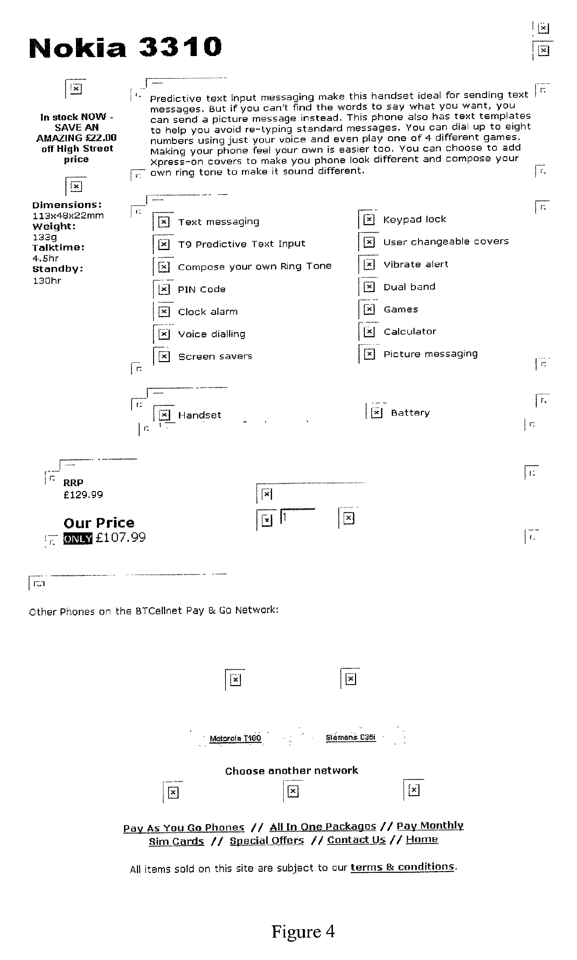

Figure 4 shows a representation of an example HTML file forming a mobile phone product web page as viewed using a web browser, which is suitable for processing using the seven wrapping rules set out above, in combination with the processing method described above with reference to Figures 2 and 3. Considering the HTML file displayed in Figure 4, consider, by way of example, the use of wrapping rule 1 above:

### Step S120: attributePageFraction <- cutAttributePage(Page, rule.attribute range).

By substituting the parameter rule field *attribute range* in the above statement with the value specified in Extraction Rule 1, we have: *attributePageFraction <- cutAttributePage(Page,* "top"). Here Page refers to the one shown in Figure 4. The function of *cutAttributePage*(Page, rule.*attribute range)* is used to return a fraction of the Page specified by rule.*attribute range.* In this case, the top one-third of the original page is cut out and stored in *attributePageFraction*.

### Step S220: attributeLocation <- locateAttribute(rule.attribute location, rule.attribute content, attributePageFraction).

By substituting the parameters in the above statement with the values specified in wrapping rule 1, we have: *attributeLocation* <- *locateAttribute*("heuristic matching", "biggest size", *attributePageFraction*). Here the function of *locateAttribute(rule.attribute location, rule.attribute content, attributePageFraction*) is used to locate the attribute within *attributePageFraction* by using *rule.attribute location* and *rule.attribute content.* In this case, a heuristic matching rule, "biggest size", is used to locate the attribute "Brand_of_Mobilephone". This rule is executed by finding the text of the largest size in *attributePageFraction*. The text of the largest size in attributePageFraction is "Nokia 3310". The starting point of this text is the location of the attribute "Brand_of_Mobilephone".

### Step S140: dataPageFraction <- cutDataPage(attributePageFraction, attributeLocation, rule.data range).

By substituting the parameters in the above statement with the values specified in the wrapping rule 1, we have *dataPageExtraction <- cutDataPage*(*attributePageFraction, attributeLocation, 0).* This acts to cut a minimum fraction of page out of *attributePageFraction* in which the attribute and the data associated with it are expected to occur. *attributeLocation* specifies the starting point of this page fraction and rule.*data range* specifies the length of this page fraction. By assigning 0 to rule.*data range,* this means that the data will be extracted from the current location of the attribute. At the end of this step, therefore, *dataPageFraction* will be assigned "Nokia 3310".

### Step S150: attributeData <- extractData(dataPageFraction, rule.data extraction method, rule.data content).

By substituting the parameters in the above statement with the values specified in wrapping rule 1, we have *attributeData <- extractData("Nokia* 3310", "direct", null). This acts to extract data from the fraction of the web page specified by *dataPageFraction,* by using data extraction method specified by rule.data *extraction method* and rule.data *content.* In this case, "Nokia 3310" will be returned directly as the data for the attribute.

### Step S160: pair<- generatePair(rule.attribute name, attributeData).

By substituting the parameters in the above statement with the values specified in the wrapping rule 1, we have pair <- *generatePair*("Brand_of_Mobilephone", "Nokia 3310"). This acts to generate and return a pair of *(rule.attribute name, attributeData*). In this case ("Brand_of_Mobilephone", "Nokia 3310") is generated and assigned to pair.

The other wrapping rules are processed in a similar manner to give rise to the following output pairs:
pair(1):- ("Brand_of_Mobilephone", "Nokia 3310");
pair(2):- ("Service_Provider", "btcellnet");
pair(3):- ("Original_Price", "£129.99);
pair(4):- ("Current_Price", "£107.99");
pair(5):- ("Comparable_Price", "£22.00");
pair(6):- ("Availability", true);
pair(7):- ("Sale_ID", "Nokia 3310_btcellnet").

Pair(7) and pairs(3-6) are then used to update the comparison table contained in the mobile telephone comparison web-site.

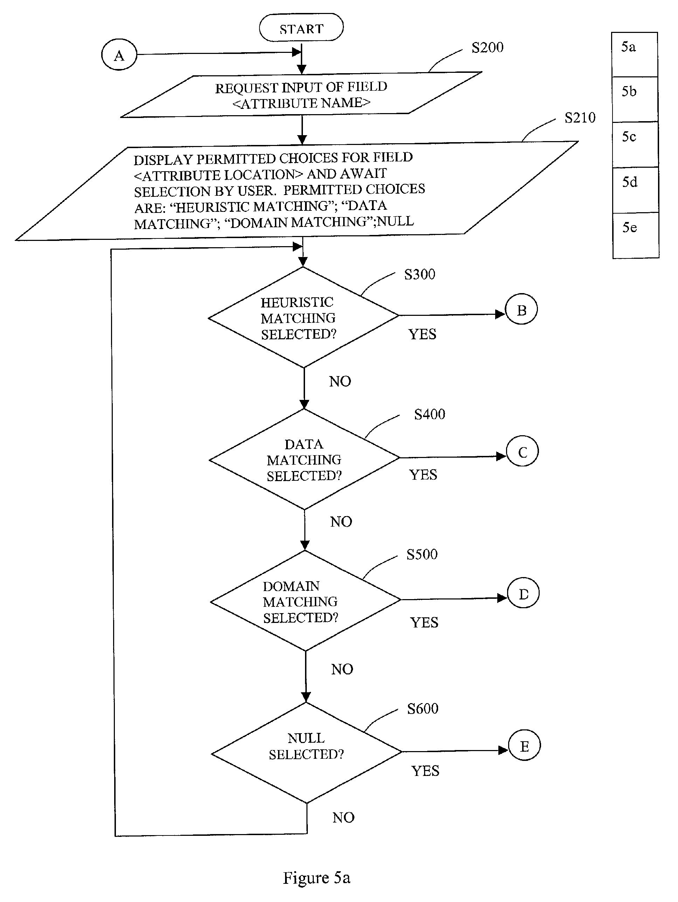

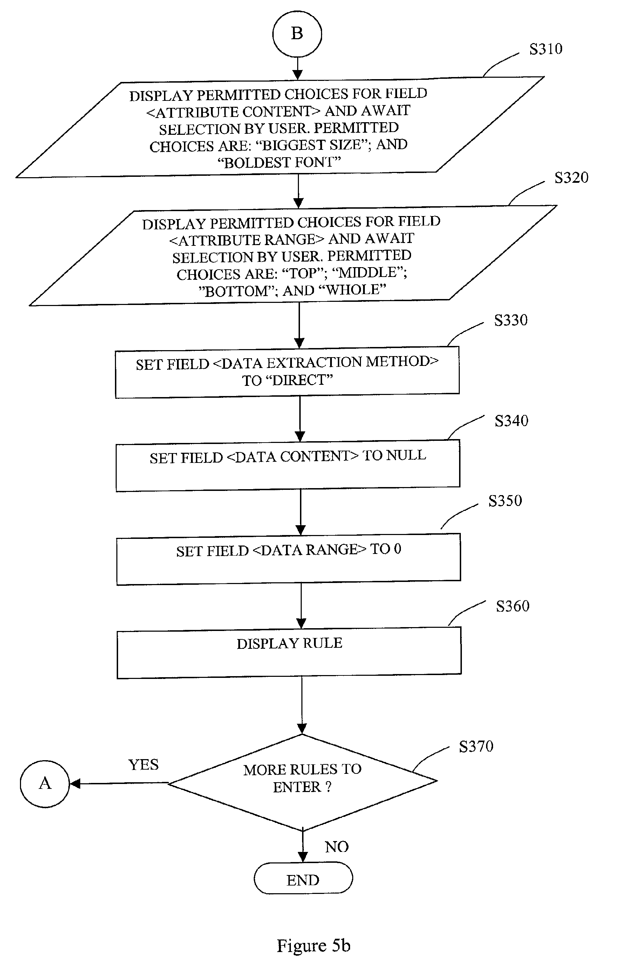

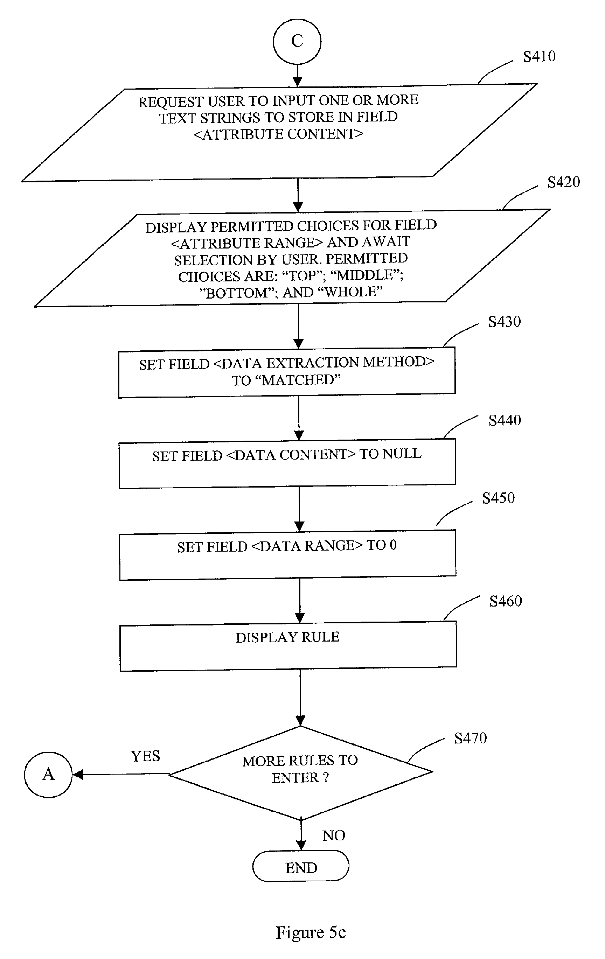

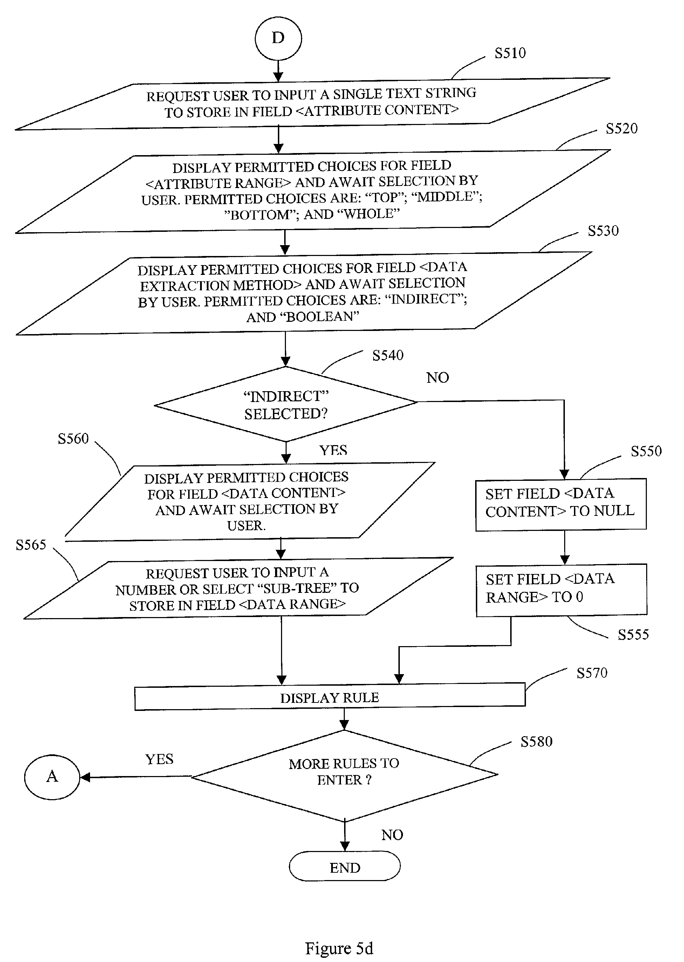

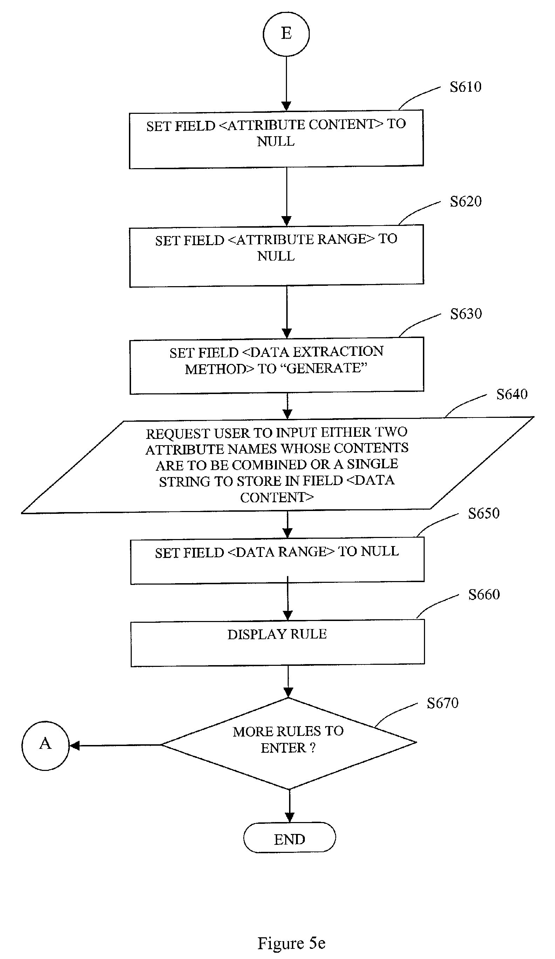

Referring now to Figure 5, the way in which wrapping rules 1 to 7 are created is now described. An important aspect of the present invention is that both the processing methods and the wrapping rules input to those methods should be constrained such that not all types of access methods for locating data within an HTML or similar file are possible. This is achieved in the present embodiment by providing a user interface for creating wrapping rules which only permits certain options to be followed by a user to prevent the user from accidentally specifying wrapping rules which may be either incompatible with the method for processing the rules or, importantly, may be less robust to minor modifications in the content of the HTML or similar files to be processed than the wrapping rules which are permitted to be created by the user interface.

In the present embodiment, the user interface proceeds according to the method illustrated by the flow chart of Figure 5. Thus, upon commencement of the method at step S200, the user is prompted to enter the first rule field for the rule, namely the attribute name (ie rule field *<attribute name>).* The user has virtually complete freedom of choice over what to enter at this stage. If, however, the user enters the same name here as for an already existing rule, the user may be prompted to enter a different name, to provide a new package name or other higher level grouping for overcoming the conflict, or to accept that the pre-existing rule will be over-written by the new one about to be created.

Upon completion of step S200, flow passes to step S210 in which the various choices which can be selected by the user at this stage for the rule field *<attribute location>* are presented to the user. The permitted choices are "heuristic matching", "data matching", "domain matching" and null. The flow of the method remains at step S210 until the user selects one of these options (unless the user chooses to quit the program which can be done at any time causing no rule to be created).

Upon completion of step S210, flow passes to step S300 in which it is determined if the user selected "heuristic matching" in step S210. If so, flow passes to step S310 (see Figure 5b).

In step S310 the various choices which can be selected by the user at this stage for the rule field *<attribute content>* are presented to the user. The permitted choices are "biggest size" and "bold font". Of course in a more sophisticated embodiment more possible choices would be presented to the user such as colour, font type, etc. Once the user has selected one of these options flow passes to step S320.

At step S320, the various choices which can be selected by the user at this stage for the rule field *<attribute range>* are presented to the user. The permitted choices are "top", "middle", "bottom" and "whole". Once the user has selected one of these options flow passes to step S330.

At step S330, the method determines that, in the present embodiment, there is only one possible choice for the next rule field *<data extraction method>* given that the rule field *<attribute location>* was set in step S210 as "heuristic matching" and therefore the user interface in the current implementation automatically sets the rule field *<data extraction method>* to the only permitted choice of "direct". This automatic selection of this field is, however, displayed to the user to keep the user informed of what is going on.

Upon completion of step S330, flow passes to step S340 in which again there is only one permitted choice for the rule field *<data content>* which is therefore automatically set to null.

Upon completion of step S340, flow passes to step S350 in which again there is only one permitted choice for the rule field *<data range>* which is therefore automatically set to the sole permitted option of null.

Upon completion of step S350, flow passes to step S360 in which the entire rule as thus created is displayed to the user. Additionally, in the present embodiment, the thus created rule is saved in a previously specified location as a Java class file.

Upon completion of step S360, flow passes to step S370 in which the user interface requests the user to indicate whether there are any more rules which the user wishes to create in the current set of rules. If the user indicates that there are no further rules to be created in this set the method ends. Otherwise, flow passes back to step S200.

If at step S300 it was determined that heuristic matching had not been selected in step S210, then flow passes to step S400 in which it is determined if "data matching" was selected in step S210 and, if so, flow passes to step S410 (see Figure 5c).

In step S410, the user is requested to input a desired value for the rule field <*attribute content>.* Since data matching was selected in the preceding step, this field holds the word or words which will be searched for by the *locateAttribute* method when executing the completed rule. The user interface informs the user that this is the case and continues to permit entry of further text strings until the user has entered all possibilities.

Upon completion of step S410, flow passes to step S420 in which the various choices which can be selected by the user at this stage for the rule field <*attribute range>* are presented to the user. The permitted choices are "top", "middle", "bottom" and "whole". Once the user has selected one of these options flow passes to step S430.

At step S430, the method determines that, in the present embodiment, there is only one possible choice for the next rule field *<data extraction method>* given that the rule field *<attribute location>* was set in step S210 as "data matching" and therefore the user interface in the current implementation automatically sets the rule field *<data extraction method>* to the only permitted choice of "matched".

Upon completion of step S430, flow passes to step S440 in which again there is only one permitted choice for the rule field *<data content>* which is therefore automatically set to null.

Upon completion of step S440, flow passes to step S450 in which again there is only one permitted choice for the rule field *<data range>* which is therefore automatically set to the sole permitted option of null.

Upon completion of step S450, flow passes to step S460 in which the entire rule as thus created is displayed to the user. Additionally, in the present embodiment, the thus created rule is saved in a previously specified location as a Java class file.

Upon completion of step S460, flow passes to step S470 in which the user interface requests the user to indicate whether there are any more rules which the user wishes to create in the current set of rules. If the user indicates that there are no further rules to be created in this set the method ends. Otherwise, flow passes back to step S200.

If at step S400 it was determined that data matching had not been selected in step S210, then flow passes to step S500 in which it is determined if "domain matching" was selected in step S210 and, if so, flow passes to step S510 (see Figure 5d).

In step S510, the user is requested to input a desired value for the rule field *<attribute content>.* Since domain matching was selected in the preceding step, this field holds the key-word or words which will be searched for by the *locateAttribute* method when executing the completed rule in order to locate the position of the desired data within a few words. The user interface informs the user that this is the case and continues to permit entry of further text strings until the user has entered all possibilities. If more than one key-word is entered here, the *locateAttribute* method will search for the first occurrence in the currently selected HTML file of any one of the enterd key-words.

Upon completion of step S510, flow passes to step S520 in which the various choices which can be selected by the user at this stage for the rule field *<attribute range>* are presented to the user. The permitted choices are "top", "middle", "bottom" and "whole". Once the user has selected one of these options flow passes to step S530.

At step S530, the method determines that, in the present embodiment, there are only two possible choices for the next rule field *<data extraction method>* given that the rule field *<attribute location>* was set in step S510 as "domain matching" and therefore the user interface in the current implementation displays the two possible choices available to the user of "indirect" and "Boolean" and awaits selection of one of these options by the user.

Upon completion of step S530, flow passes to step S540 in which it is determined whether or not "indirect" was selected by the user for the field *<data extraction method>* in the preceding step. If "indirect" was not selected (and therefore "Boolean" was clearly selected in its place) then flow proceeds to step S550 in which, because there is only a single possible allowed value for the rule field *<data content>* in such a case, the single allowed value of null is set. This setting is displayed to the user.

Upon completion of step S550, flow passes to step S555 in which, because there is only a single possible allowed value for the rule field *<data range>* in such a case, the single allowed value of 0 is set. This setting is again displayed to the user.

Upon completion of step S555, flow passes to step S570 discussed in greater detail below.

If at step S540 it is determined that the user has selected "indirect" for the field *<data extraction method>* then flow passes to step S560 in which a number of permitted options are displayed for selection of one of the permitted options by the user. In the current implementation, the permitted options are "next currency", "next level content", "next date" and "length of period". Of course, more sophisticated implementations could include many more such options.

Upon completion of step S560, flow passes to step S565 in which the user is requested to either input a number indicating the number of words beyond the start of the domain location (as determined by the *locateAttribute* method in the case where the rule field *<attribute location>* has the value "domain matching") which are to be selected by the *cutDataPage* method to generate the data to be stored in the intermediate processing field *dataPageFraction,* or to select the alternative permitted option of "Sub-tree". If "Sub-tree" is selected, then the *cutDataPage* method will select all text which is "dominated" by the attribute detected using the *locateAttribute* function. The current implementation not only considers HTML tags (and in particular relying on the normal tree structure implied by nested tags) to determine if certain text is dominated by the located attribute (for instance all cells within a table are dominated by the table title, etc.) but also using heuristic rules. In the current implementation, one such heuristic rule which is used is that any text which is not in bold and which follows, without an intervening new line (or similar) tag, from bold text, is dominated by the bold text.

Upon completion of step S565, flow passes to step S570 in which the entire rule as thus created is displayed to the user. Additionally, in the present embodiment, the thus created rule is saved in a previously specified location as a Java class file.

Upon completion of step S570, flow passes to step S580 in which the user interface requests the user to indicate whether there are any more rules which the user wishes to create in the current set of rules. If the user indicates that there are no further rules to be created in this set the method ends.
Otherwise, flow passes back to step S200.

If at step S500 it was determined that domain matching had not been selected in step S210, then flow passes to step S600 in which it is determined if null was selected in step S210 and, if so, flow passes to step S610 (see Figure 5e).

In step S610, the method determines that, in the present embodiment, there is only one possible choice for the rule field <*attribute content>* given that the rule field *<attribute location>* was set in step S210 as null, namely the choice null. As such, this value is automatically set by the user interface and then flow proceeds to step S620. Note that the user interface displays to the user that this setting has been made.

Again in step S620, there is only one possible choice for the field *<attribute range>,* namely null, in view of the selection of the value null at step S210.

Therefore this value is automatically set by the user interface and then flow proceeds to step S630. Note that the user interface again displays to the user that this setting has been made.

At step S630, the method determines that, in the present embodiment, there is only one possible choice for the next rule field *<data extraction method>* given that the rule field *<attribute location>* was set in step S210 as null and therefore the user interface in the current implementation automatically sets the rule field *<data extraction method>* to the only permitted choice of "generate". Note that the user interface again displays to the user that this setting has been made.

Upon completion of step S630, flow passes to step S640 in which the user is requested to enter either two values of the rule field *<attribute name>* in respect of two other (earlier) rules or a single text string. In both cases, the values entered are stored in the rule field *<data content>.* When the method *extractData* detects that the rule field *<data extraction method>* is set to "generate", it checks to see if two strings are entered in the rule field *<data content>*.

If the method *extractData* determines that there are two strings stored in the rule field *<data content>* when the method is run, it checks that they correspond to rules which have already been processed in respect of the current HTML file and, if so, it extracts from the field *pair,* associated with each respective corresponding rule, the data associated with the field *attributeData* and combines the two thus "extracted" sets of data. For example, in the case of Wrapping Rule 7 set out above, the rule field *<data content>* stores the values "Brand_of_Mobilephone" and "Service_Provider". During execution of the method *extractData,* it checks that these correspond to earlier rules (in this case Wrapping Rules 1 and 2 respectively) and determines from the *pair* fields associated with these rules (after these have been applied to the current HTML file) the corresponding *attributeData's.* In the case of the HTML file illustrated in Figure 4, this gives rise to the *extractData* method returning the value "Nokia 3310_btcellnet" and storing this in the intermediate processing field *attributeData*.

If the method *extractData* determines that there is only a single string present in the rule field *<data content>* then it simply returns this value directly. For example in Wrapping Rule 8 set out above, the value URL1 is returned by the method *extractData* and stored in the intermediate processing field *attributeData.*

Upon completion of step S640, flow passes to step S650 in which again there is only one permitted choice for the rule field *<data range>* which is therefore automatically set to the sole permitted option of null.

Upon completion of step S650, flow passes to step S660 in which the entire rule as thus created is displayed to the user. Additionally, in the present embodiment, the thus created rule is saved in a previously specified location as a Java class file.

Upon completion of step S660, flow passes to step S670 in which the user interface requests the user to indicate whether there are any more rules which the user wishes to create in the current set of rules. If the user indicates that there are no further rules to be created in this set the method ends.
Otherwise, flow passes back to step S200.

### Description of the Second Embodiment

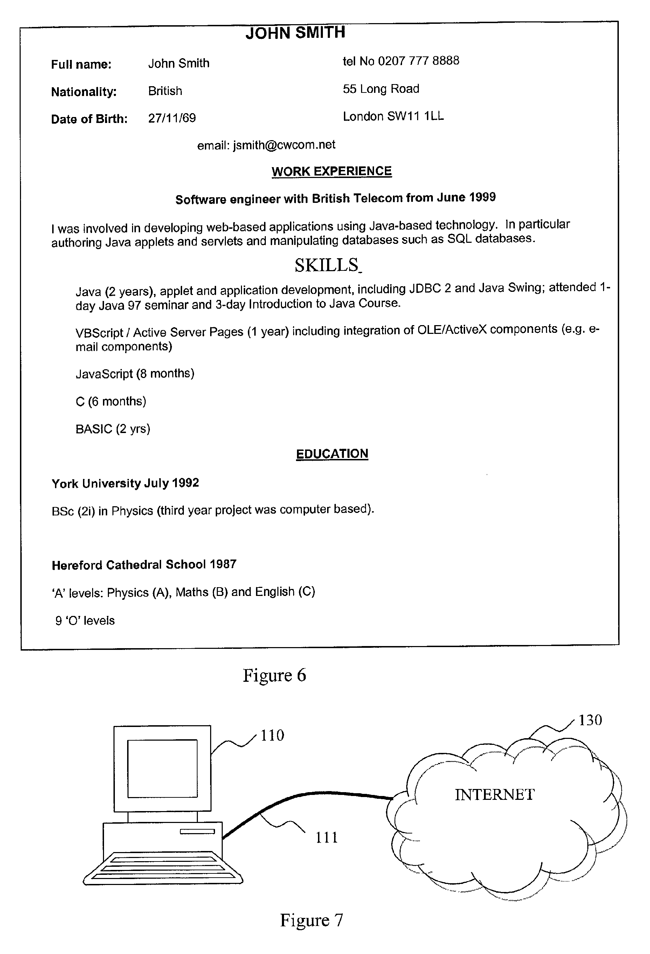

A second embodiment of the present invention will now be described with reference to Figures 6 and 7. Figure 6 is a screen dump of an extract from a web page of an example curriculum vitae. By using a different set of wrapping rules (Wrapping rules 9 to 11 set out below) the wrapping program described above with reference to Figures 2 and 3 can be used to extract information from web-pages such as that illustrated in Figure 6.

Figure 7 is a block diagram of the second embodiment in which a computer 110, which is connected to the Internet 130 via a data connection 111, runs the wrapping program described above with reference to Figures 2 and 3 using Wrapping rules 9 to 11 (set out below) to process HTML files containing CV's of potential applicants. The HTML files of CV's may be sent, for example, by a recruitment company. The wrapping program processes the HTML files to attempt to extract the information of interest to the user of computer 110, and alerts the user if certain conditions are met so that the user may read the entire CV if it is likely to be of interest.

The Wrapping rules used in this embodiment are:
**Extraction Rule 9:**
   *attribute name: "Full Name"*
   *attribute location: "domain matching"*
   *attribute content: "Full name"*
   *attribute range: "whole"*
   *data extraction method: "indirect"*
   *data content: "next level content"*
   *data range: sub-tree*
**Extraction Rule 10:**
   *attribute name: "Date_of Birth"*
   *attribute location: "domain matching"*
   *attribute content: "Date of Birth"*
   *attribute range: "whole"*
   *data extraction method: "indirect"*
   *data content: "Next Date"*
   *data range: sub-tree*
**Extraction Rule 11:**
   *attribute name: "Java"*
   *attribute location: "domain matching"*
   *attribute content: "Java"*
   *attribute range: "whole"*
   *data extraction method: "indirect"*
   *data content: "length of period"*
   *data range: 6*

When Wrapping rule 9 is employed by the wrapping program to process the HTML file illustrated in Figure 6, the following steps occur:

### Step 1: attributePageFraction <- cutAttributePage(Page, Rule."attribute range").

By substituting the parameter in the above statement with the value specified in Wrapping rule 9, we have: *attributePageFraction <- cutAttributePage*(Page, "whole"). Here Page refers to the one shown in Figure 6. The function of *cutAttributePage*(Page, Rule."*attribute range"*) is used to return a fraction of the Page specified *by Rule."attribute range".* In this case, the whole original page is cut out and stored in *attributePageFraction.*

### Step 2: attributeLocation <- locateAttribute(Rule."attribute location", Rule."attribute content", attributePageFraction).

By substituting the parameters in the above statement with the values specified in Wrapping rule 9, we have: *attributeLocation <- locateAttribute*("domain matching", "full name", *attributePageFraction*). Here the function of *locateAttribute(Rule."attribute location", Rule."attribute content', attributePageFraction*) is used to locate the attribute within *attributePageFraction* by using Rule."*attribute location*" and Rule."*attribute content*". In this case, a domain matching rule, "full name", is used to locate the attribute "Full_Name". This rule is executed by searching for "Full name" in *attributePageFraction*. Once "Full name" is found, this attribute will be located.

### Step 3: dataPageFraction <- cutDataPage(attributePageFraction, attributeLocation, Rule."data range").

By substituting the parameter Rule."data *range" in* the above statement with the value specified in the Wrapping rule 9, we have *dataPageExtraction <- cutDataPage(attributePageFraction, attributeLocation,* sub-tree). The function of *cutDataPage*(*attributePageFraction, attributeLocation,* Rule."data range") is used to cut a minimum fraction of page out of *attributePageFraction* where the attribute and the data associated with it must occur in. *attributeLocation* specifies the starting point of this page fraction and Rule."data *range"* specifies the length of this page fraction.

We note that we generate a tree structure out of the content of the web page. Besides the normal tree structure implied by the nested tags, for instance, each cell of a table is dominated by the table, we also expand the tree structure by using some heuristic rules. One of the rules is:
IF we detect **"Text1** Text2", where **"Text1** is in bold" AND "Text2 is in ordinary format"
THEN we have **"Text1** dominates Text2".

For instance if we got **"Full name** John Smith", we have **"Full name"** dominates "John Smith".

By assigning "sub-tree" to Rule."*data range",* this means that a sub-tree starting from the location of current attribute will be cut out. At the end of this step, *dataPageFraction* will be assigned the content.

### Step 4: attributeData <- extractData(dataPageFraction, Rule."data extraction method", Rule."data content").

By substituting the parameters in the above statement with the values specified in the Wrapping rule 9, we have attributeData <- ExtractData("**Full name:** John Smith", "indirect", "next level content"). The function of ExtractData(DataPageFraction, Rule."data extraction method", Rule."data content") is to extract data from a fraction of web page specified by *dataPageFraction*, by using data extraction method specified by Rule."data *extraction method"* and Rule."*data content*". In this case, "John Smith" will be returned indirectly as the data for the attribute "Full_Name", since it is the next level content in the expanded tree structure.

### Step 5: pair <- generatePair(Rule."attribute name", attributeData).

By substituting the parameters in the above statement with the values specified in the extraction Rule 1 and previously calculated, we have *pair <- generatePair*("Full_Name", "John Smith"). The function of *generatePair*(Rule."*attribute name*", *attributeData)* is to generate and return a pair of (*Rule."attribute name*", *attributeData).* In this case ("Full_Name", "John Smith") is generated and assigned to Pair.

When Wrapping rule 10 is employed by the wrapping program to process the HTML file illustrated in Figure 6, the procedure is similar to that described above with respect to Wrapping rule 9 except that at step 3 the sub-tree which is extracted and stored in the intermediate processing field *dataPageFraction* is **"Date of Birth:** 27/11/69".

At Step 4, the method of "Next Date" is used to convert "27/11/69" to the format required by the system, say "27-11-69".

At Step 5, ("Date_of_Birth", "27-11-69") is returned as a pair.

When Wrapping rule 11 is employed by the wrapping program to process the HTML file illustrated in Figure 6, the following steps take place:
**Step 1: *attributePageFraction <- cutAttributePage*(Page, *Rule. "attribute range").***
   *=> attributePageFraction <- cutAttributePage(Page,* "whole").
   By specifying "whole" in the function of CutAttributePage, the returned page is still the same as Page that is shown in Figure 6.
**Step 2: *attributeLocation <- locateAttribute(Rule."attribute location", Rule."attribute* content", *attributePageFraction)***
   *=> attributeLocation <- locateAttribute*("domain matching","java", *attributePageFraction*).
   By specifying "domain matching" in the function of *locateAttribute*(), the engine will search in the page *attributePageFraction* for the name "java". Once "java" is found, its location will assigned to *attributeLocation.*
**Step 3: *dataPageFraction <- cutDataPage(attributePageFraction, attributeLocation, Rule."data range")*.**
   *=> dataPageFraction <- cutDataPage(attributePageFraction,* "java", 6).
   By specifying 6 as data range, we will get six words starting from "java". The result of DataPageFraction is "Java ( 2 years ), applet and application".
   "Java (2 years), applet and application."
**Step 4: *attributeData <- extractData(dataPageFraction, Rule*. *"data extraction method", Rule."data content").***
   *=> attributeData <- extractData*("Java (2 years), applet and application", "indirect", "length of period").
   By specifying "length of period" as the data extraction method, "2 years" is be extracted from "Java (2 years), applet and application" as the first period span.
**Step 5: *pair <- generatePair(Rule.attribute, attributeData).***
   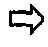 *pair <- generatePair*("Java", "2 years").
   ("Java", "2 years") will be returned and assigned to *pair.*

### Discussion of alternatives

In place of processing HTML files, the wrapping program could be adapted to process any number of other formats of, largely text based, files. For example, simple text files, formatted text files rich-text files, and word-processing files such as Microsoft WORD documents, etc could all be processed using similar wrapping program techniques.

## Claims

1. A method of extracting information from a specified ordered group of data containing semi-structured data, the method comprising the steps of:
extracting data from within the specified ordered group of data from a location as specified by a plurality of rules; wherein
the rules specify the location, within the specified ordered group of data, of data to be extracted, in terms of visual characteristics of the data to be extracted as they appear when the specified ordered group of data is displayed using a computer application capable of displaying the semi-structured data in a manner determined by formatting data included in the specified ordered group of data.

2. A method as claimed in Claim 1 wherein the ordered group of data is a data file storing HTML content.

3. A method as claimed in Claim 2 wherein the rules specify the location of the data to be extracted in terms of visual characteristics of the data as they appear when the data file is displayed using a web browser, and the formatting data included in the data file is in the form of HTML tags.

4. A method as claimed in claim 3 wherein the rules are formed from a combination of one or more specifications of the following visual characteristics of the data to be extracted as they appear, relative to the appearance of the specified data file as a whole, when the specified file is displayed within the browser: the fractional area within the specified file, as it appears within the displaying computer application, of the data; the relative size of the font of the data if it is in the form of text; the colour of the data; the proximity of the data to a specified keyword; and the location of the data relative to a specified keyword.

5. A method of generating a set of rules for extracting one or more sets of data from a specified ordered group of data containing semi-structured data, the method comprising the steps of:
controlling the display of a list of names of visual characteristics suitable for describing the location of a set of data to be extracted from a specified ordered group of data containing semi-structured data; and
generating one or more rules involving a combination of one or more of the displayed characteristics together with one or more specified values of the characteristics, in response to input signals generated by a user.

6. A method as claimed in claim 5 further comprising the step of converting the rules into computer implementable instructions for processing an input file containing HTML content and outputting the data which would be displayed at the location specified by the rules if the input file were displayed in a browser for displaying HTML content.

7. A method as claimed in claim 6 wherein the computer implementable instructions are in the form of a Java class file.

8. Computer processing means for carrying out the method of any one of claims 1 to 4, including reading means for reading the specified file, a memory and writing means for writing extracted data to the memory.

9. A device for generating a set of rules for extracting one or more sets of data from a specified ordered group of data containing semi-structured data comprising:
display control means for controlling the display of a list of names of visual characteristics suitable for describing the location of a set of data to be extracted from a specified ordered group of data containing semi-structured data; and
rule generation means for generating one or more rules comprising a combination of one or more of the displayed characteristics together with one or more specified values of the characteristics, wherein the specified values of the characteristics are set in response to input signals generated by a user via a user interface.

10. A device as claimed in claim 9 further including conversion means for converting the generated rules into computer implementable instructions for processing an input file containing HTML content and outputting the data which would be displayed at the location specified by the rules if the input file were displayed in a browser for displaying HTML content.
